# EUROPÄISCHE PATENTSCHRIFT

(11) **EP 3 292 804 B1**
(45) Veröffentlichungstag und Bekanntmachung des Hinweises auf die Patenterteilung: **29.05.2019**
(21) Anmeldenummer: 17186258.4
(22) Anmeldetag: 15.08.2017
(51) Int. Cl.: A47J 43/06

(54) **KÜCHENMASCHINEN-GETRIEBEADAPTER MIT VERSCHLUSSHEBEL**
KITCHEN MACHINE TRANSMISSION ADAPTOR WITH LOCKING LEVER
ADAPTATEUR DE TRANSMISSION DE ROBOT MÉNAGER DOTÉ D'UN LEVIER D'ENCLENCHEMENT

(30) Priorität: 26.08.2016 DE 102016216095
(43) Veröffentlichungstag der Anmeldung: 14.03.2018
(73) Patentinhaber: BSH Hausgeräte GmbH, 81739 München (DE)
(72) Erfinder: Ivanusic, Marko, 1000 Ljubljana (SI); Cater, Matej, 3301 Petrovce (SI); Semeja, Uros, 3327 Smartno ob Paki (SI)

(56) Entgegenhaltungen:
- EP-A1- 2 777 447
- DE-U1-202016 104 138
- FR-A1- 2 983 054

## Beschreibung

Die vorliegende Erfindung betrifft einen Getriebeadapter zum Anschluss an eine Küchenmaschine (also einen Küchenmaschinen-Getriebeadapter) und eine Küchenmaschine mit einem Getriebeadapter.

Eine Vielzahl von Küchenmaschinenkomponenten, die zum Be- oder Verarbeiten von Lebensmitteln an eine geeignete Küchenmaschine angeschlossen werden können, umfasst jeweils mindestens ein rotierbares Element, das dazu eingerichtet ist, das jeweilige Lebensmittel zu rühren, zu passieren, zu zerkleinern oder dergleichen. Derartige rotierbare Elemente werden in der Regel durch einen Elektromotor der Küchenmaschine angetrieben, der eine Rotation einer Welle um eine Rotationsachse bewirkt: Mittels einer Kupplung kann diese küchenmaschinenseitige Rotation auf ein jeweiliges rotierbares Element einer angeschlossenen Küchenmaschinenkomponente übertragen werden. Eine solche Komponente ist beispielsweise in der FR 2 983 054 offenbart.

Ein Getriebeadapter kann dabei dazu dienen, eine derartige Übertragung auch in eine Rotation um eine andere Rotationsachse als die ursprüngliche zu ermöglichen, beispielsweise weil der Elektromotor in bestimmungsgemäßer Ausrichtung der Küchenmaschine eine Rotation um eine vertikal verlaufende erste Rotationsachse bewirkt, ein rotierbares Element der jeweiligen Komponente aber um eine horizontal verlaufende Rotationsachse rotieren soll. Herkömmlicherweise wird ein solcher Getriebeadapter an einen Adapteranschluss der Küchenmaschine angeschlossen und mittels einer Schraubverbindung fixiert.

Eine derartige Fixierung hat den Nachteil, dass sich die Schraubverbindung durch Vibrationen im Betrieb der Küchenmaschine lösen kann. Zudem erhält ein Verwender keine klare Rückmeldung darüber, ob die Schraubverbindung ausreichend fest ist. Daher kann er beispielsweise eine über einen Getriebeadapter angeschlossene Komponente der Küchenmaschine in Betrieb nehmen, wenn der Getriebeadapter nur unzureichend an der Küchenmaschine fixiert ist. Der Getriebeadapter kann dadurch während des Betriebs von der Küchenmaschine abfallen, was sowohl die Gefahr von Verletzungen birgt, als auch zu Verschmutzungen des jeweiligen Lebensmittels und der Umgebung der Küchenmaschine führen kann.

Die vorliegende Erfindung hat die Aufgabe, eine Technik bereitzustellen, mit der eine Umlenkung der Rotation einer Küchenmaschine unter Vermeidung der genannten Nachteile möglich ist.

Ein erfindungsgemäßer Getriebeadapter ist dazu eingerichtet, an eine Küchenmaschine angeschlossen zu werden; dazu weist er ein Gehäuse mit einem ringartigen Gehäusebereich auf, der einen Innenbereich zur Aufnahme eines küchenmaschinenseitigen Adapteranschlusses umgibt.

Eine vorgesehene Anschlussbewegung kann beispielsweise eine lineare und/oder eine Drehbewegung umfassen. Der Getriebeadapter kann zum Beispiel ein Gewinde und/oder mindestens ein Element eines Bajonettverschlusses umfassen, das dazu eingerichtet ist, mit mindestens einem passenden Element am Adapteranschluss zusammenzuwirken und so den Getriebeadapter am Adapteranschluss zu halten.

Ein erfindungsgemäßer Getriebeadapter ist ferner dazu eingerichtet, im angeschlossenen Zustand eine von einem Elektromotor der Küchenmaschine bewirkte Rotation umzulenken, also eine küchenmaschinenseitige Rotation um eine erste Rotationsachse in eine Rotation um eine zweite, von der ersten verschiedene Rotationsachse umzuwandeln. Die Umlenkung kann eine Drehmoments-Übersetzung im Verhältnis 1:1 oder eine Übersetzung auf ein kleineres oder größeres Drehmoment umfassen.

Zudem weist der erfindungsgemäße Getriebeadapter einen Rastmechanismus mit einem flexiblen Element auf, das dazu eingerichtet ist, mit dem Adapteranschluss zu verrasten. In einem derart verrasteten Zustand können z.B. mindestens ein Bereich des flexiblen Elements und ein Bereich des Adapteranschlusses ineinandergreifen und/oder aneinander anstoßen, und zum Lösen dieses Ineinandergreifens bzw. aneinander Anstoßens kann ein Nachgeben des flexiblen Elements erforderlich sein.

Schließlich umfasst ein erfindungsgemäßer Getriebeadapter einen (verschwenkbaren) Verschlusshebel, der in einer Schließstellung das flexible Element fixiert.

Als "fixiert" wird das flexible Element dabei in dieser Schrift verstanden, wenn es eine Bewegungsfreiheit des flexiblen Elements so weit einschränkt, dass ein Lösen und/oder Anschließen des Getriebeadapters an den Adapteranschluss (bzw. ein Lösen und/oder Eingehen der Rastverbindung) nicht möglich ist; dabei kann das flexible Element noch in einem begrenzten Spielraum nachgiebig sein, eine absolute Unbeweglichkeit des flexiblen Elements ist also auch in dessen "fixiertem Zustand" nicht zwingend erforderlich.

Insbesondere kann durch das Fixieren ein Nachgeben des flexiblen Elements in mindestens eine Richtung verhindert und auf diese Weise ein Lösen des Getriebeadapters vom Adapteranschluss unterbunden werden.

Aufgrund des Rastmechanismus lässt sich ein erfindungsgemäßer Getriebeadapter in vorteilhafter Weise an einen Adapteranschluss einer Küchenmaschine anschließen, wobei die Fixierung des flexiblen Elements ein unbeabsichtigtes Ablösen, beispielsweise infolge von Vibrationen unterbindet. Zudem kann ein Verwender an der jeweiligen Hebelstellung des Verschlusshebels unmittelbar erkennen, ob die Verbindung von Getriebeadapter und Adapteranschluss hinreichend fest ist. Dadurch wird eine erhöhte Sicherheit der Küchenmaschine erreicht.

Der Verschlusshebel ist vorzugsweise mindestens teilweise am ringartigen Gehäusebereich angeordnet, und zwar bevorzugt außen (also an der vom Innenbereich abgewandten Seite). Der Verschlusshebel wird somit vorzugsweise in dem Bereich eingesetzt, in dem der Adapteranschluss aufgenommen werden kann.

Insbesondere ist vorzugsweise eine Hebelachse (um die der Verschlusshebel verschwenkbar ist) am ringartigen Gehäusebereich angeordnet. Sie kann beispielsweise im Wesentlichen senkrecht zur küchenmaschinenseitigen Rotationsachse verlaufen (die umzulenken der Getriebeadapter eingerichtet ist) verlaufen. In einer bestimmungsgemäßen Ausrichtung der Küchenmaschine, in der die zentrale Achse vorzugsweise vertikal angeordnet ist, kann der Verschlusshebel bei einer derartigen Ausführungsform von unten nach oben bzw. umgekehrt um die Hebelachse verschwenkt werden.

Gemäß einer alternativen bevorzugten Ausführungsform eines erfindungsgemäßen Getriebeadapters verläuft die Hebelachse des Verschlusshebels im Wesentlichen parallel zur küchenmaschinenseitigen Rotationsachse. Ist diese Rotationsachse in einer bestimmungsgemäßen Ausrichtung der Küchenmaschine vertikal ausgerichtet, kann der Verschlusshebel bei einer solchen Ausführungsform also horizontal verschwenkt werden.

Der ringartige Gehäusebereich ist vorzugsweise starr ausgebildet bzw. aus einem steifen Material, kann also nicht verengt werden. Vorzugsweise weist er an der dem Innenbereich zugewandten Oberfläche ein oder mehrere Halteelemente auf, die dazu eingerichtet sind, mit einer entsprechenden Oberfläche am Adapteranschluss zusammenzuwirken und so den Getriebeadapter, wenn er auf den Adapteranschluss aufgesetzt ist, daran zu halten.

Vorteilhaft ist eine Ausführungsvariante, bei der mindestens der ringartige Gehäusebereich und/oder das flexible Element (im Wesentlichen) ganz oder teilweise aus Metall und/oder Kunststoff bestehen: Eine derartige Ausführung ist besonders stabil bzw. leicht.

Bei einer vorteilhaften Ausführungsform eines erfindungsgemäßen Getriebeadapters ist das flexible Element am ringartigen Gehäusebereich angeordnet.

Das flexible Element kann dazu eingerichtet sein, (vorzugsweise radial) in Richtung des Innenbereichs nachzugeben (sofern nichts anderes angegeben ist, bezieht sich die Angabe "radial" in dieser Schrift stets auf eine küchenmaschinenseitigen Rotationsachse, die umzulenken der Getriebeadapter eingerichtet ist). Der Verschlusshebel kann dann dazu eingerichtet sein, das flexible Element in der Schließstellung in eine entsprechende Ausnehmung in einem angeschlossenen Adapteranschluss hineinzudrücken und so zu fixieren.

Gemäß einer bevorzugten Ausführungsvariante ist das flexible Element dazu eingerichtet, entgegen einer Rückstellkraft (vorzugsweise radial) nach außen (also vom Innenbereich weg) nachzugeben. Der Verschlusshebel ist dann vorzugsweise dazu eingerichtet, dieses Nachgeben in der Schließstellung zu unterbinden oder zumindest einzuschränken; das flexible Element ist dabei in der Schließstellung vorzugsweise entlastet, also nicht entgegen seiner Rückstellkraft ausgelenkt.

Vorteilhaft ist eine Ausführungsform, bei der das flexible Element mindestens eine Erhebung und/oder Ausnehmung aufweist, die dazu eingerichtet ist, in der Schließstellung in eine jeweilige Ausnehmung am Adapteranschluss hineinzuragen bzw. eine Erhebung am Adapteranschluss aufzunehmen, wenn der Getriebeadapter an den Adapteranschluss angeschlossen ist.

Gemäß einer bevorzugten Ausführungsform eines erfindungsgemäßen Getriebeadapters umfasst der Verschlusshebel einen Wirkabschnitt, der dazu eingerichtet ist, in der Schließstellung von außen in eine Wandung des ringartigen Gehäusebereichs hineinzuragen; vorzugsweise blockiert der Wirkabschnitt dabei innerhalb der Wandung eine Auslenkung des flexiblen Element und fixiert dieses damit. Ein Kontaktbereich von flexiblem Element und Verschlusshebel (bzw. dessen Wirkabschnitt) ist somit vorteilhaft von Gehäuse- bzw. Wandungskomponenten umgeben und auf diese Weise gegen Einwirkungen von außen (z.B. Verschmutzungen) geschützt.

In einer Öffnungsstellung des Verschlusshebels, in welcher der Getriebeadapter auf den Adapteranschluss angeschlossen bzw. vom Adapteranschluss gelöst werden kann, ragt der Wirkabschnitt bei einer derartigen Ausführungsform vorzugsweise (im Vergleich zu anderen Stellungen des Verschlusshebels, insbesondere im Vergleich zur Schließstellung) weniger bzw. am wenigsten weit (oder sogar gar nicht) in die Wandung hinein.

Vorteilhafterweise ist der Wirkabschnitt dazu eingerichtet ist, in einer Zwischenstellung zwischen einer Öffnungsstellung und der Schließstellung (vorzugsweise radial) weiter in die Wandung hineinzuragen als in der Schließstellung; der Wirkabschnitt kann dazu in einem Querschnitt (senkrecht zur Hebelachse) eine exzentrische Form aufweisen. Eine derartige Ausführungsform ermöglicht auf vorteilhafte Weise eine Sicherung des Verschlusshebels in der Schließstellung, weil zum Übergang in die Öffnungsstellung zunächst die Zwischenstellung überwunden und damit eine Mindestkraft aufgewendet werden muss.

Vorteilhaft ist eine Ausführungsform, bei der das flexible Element als Teil des ringartigen Gehäusebereichs (bzw. dessen Wandung) mit einer dem Innenbereich zugewandten Oberfläche ausgebildet ist. In einem unbelasteten Zustand, in dem also keine Kraft auf das flexible Element ausgeübt wird, ist die dem Innenbereich zugewandte Oberfläche des flexiblen Elements vorzugsweise im Vergleich zu einer das flexible Element umgebenden (dem Innenbereich zugewandten) Oberfläche des ringartigen Gehäusebereichs im Wesentlichen radial nach außen versetzt angeordnet und/oder im Wesentlichen glatt in diese umgebende Oberfläche eingebettet (so dass sie also an ihrem Rand im Wesentlichen stufenlos in die umgebende Oberfläche des ringartigen Gehäusebereichs übergeht). Die dem Innenbereich zugewandte Oberfläche des flexiblen Elements bildet somit im unbelasteten Zustand an ihrem Rand vorzugsweise keine Stufe in den Innenbereich hinein aus. Dadurch wird das flexible Element beim Anschließen oder Lösen des Getriebeadapters höchstens durch geringe Kräfte angegriffen und ist somit besonders haltbar.

Gemäß einer vorteilhaften Ausführungsform eines erfindungsgemäßen Getriebeadapters umfasst der Verschlusshebel einen Betätigungsarm (mit dem der Verschlusshebel zu betätigen ist, der also dazu eingerichtet ist, von einem Verwender zur Einstellung einer jeweiligen Stellung des Verschlusshebels (insbesondere der Schließstellung) betätigt zu werden).

Vorzugsweise ist der Betätigungsarm an einem ersten Ende des Verschlusshebels angeordnet, das einem zweiten Ende des Verschlusshebels entgegengesetzt ist, wobei das zweite Ende einen (oben genannten) Wirkabschnitt umfasst; Betätigungsarm und Wirkabschnitt sind dabei vorzugsweise monolithisch ausgebildet, beispielsweise aus mindestens einem Kunststoff und/oder Metall.

Der Betätigungsarm ist vorzugsweise dazu eingerichtet, in der Schließstellung des Verschlusshebels im Wesentlichen an dem Gehäuse des Getriebeadapters anzuliegen, bevorzugtermaßen im Wesentlichen tangential. In einer bestimmungsgemäßen Ausrichtung der Küchenmaschine kann der Betätigungsarm dabei in der Schließstellung (abhängig von einer Ausrichtung der Hebelachse) insbesondere z.B. in vertikaler Richtung oder in horizontaler Richtung an dem Gehäuse des Getriebeadapters im Wesentlichen anliegen.

Durch das Anliegen des Betätigungsarmes in der Schließstellung wird zum einen die Schließstellung besonders gut sichtbar, zum andere ist sie haptisch leicht zu erkennen und insbesondere einfach einzustellen.

Vorzugsweise ist der Betätigungsarm (alternativ oder zusätzlich) dazu eingerichtet, in einer Öffnungsstellung des Verschlusshebels im Wesentlichen radial vom Gehäuse des Getriebeadapters abzustehen. Die Öffnungsstellung ist dadurch für einen Verwender visuell und haptisch leicht zu erkennen und insbesondere gut einzustellen.

Eine erfindungsgemäße Küchenmaschine umfasst einen Adapteranschluss und einen am Adapteranschluss angeschlossenen oder anzuschließenden Getriebeadapter gemäß einer der in dieser Schrift offenbarten Ausführungsformen.

Der Adapteranschluss kann mindestens eine Erhebung und/oder mindestens eine Ausnehmung in seiner (radial) äußeren Oberfläche aufweisen, die dazu eingerichtet ist, zum Bewirken der Verrastung mit einem jeweils passenden Element am Getriebeadapter, insbesondere am flexiblen Element in eine Wirkverbindung zu treten, beispielsweise ein für ein Anschließen und/oder Lösen des Getriebeadapters erforderliches Verdrehen zu blockieren.

Gemäß einer bevorzugten Ausführungsform einer erfindungsgemäßen Küchenmaschine ist der Getriebeadapter dazu eingerichtet, mit einer jeweiligen Drehbewegung (relativ zum Adapteranschluss) in den Adapteranschluss eingedreht bzw. aus diesem herausgedreht zu werden; insbesondere können Getriebeadapter und Adapteranschluss einen Bajonettanschluss ausbilden. Das flexible Element ist dabei vorzugsweise dazu eingerichtet, für ein Lösen und ein Anschließen des Getriebeadapters jeweils radial nach außen nachzugeben, und der Adapteranschluss weist vorteilhafterweise einen Oberflächenbereich auf, der dazu eingerichtet ist, in einer Öffnungsstellung des Verschlusshebels das flexible Element bei einem Eindrehen bzw. Ausdrehen des Getriebeadapters in bzw. aus dem Adapteranschluss nach radial außen zu drücken.

Auf diese Weise kann der Rastmechanismus in Öffnungsstellung des Verschlusshebels besonders einfach, nämlich im Wege der Drehung aktiviert und deaktiviert werden.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine Küchenmaschine mit einem angeschlossenen Getriebeadapter gemäß einer Ausführungsform der vorliegenden Erfindung;
- Figur 2a:: einen exemplarischen erfindungsgemäßen Getriebeadapter mit einem Verschlusshebel in Öffnungsstellung;
- Figur 2b:: den in der Figur 2a dargestellten Getriebeadapter mit dem Verschlusshebel in Schließstellung;
- Figur 3a:: eine schematische Draufsicht auf einen Verschlusshebel eines exemplarischen erfindungsgemäßen Getriebeadapters in Öffnungsstellung;
- Figur 3b:: den Verschlusshebel gemäß Figur 3a in Schließstellung; und
- Figur 3c:: den Verschlusshebel gemäß den Figuren 3a und 3b in einer Zwischenstellung zwischen Öffnungs- und Schließstellung.

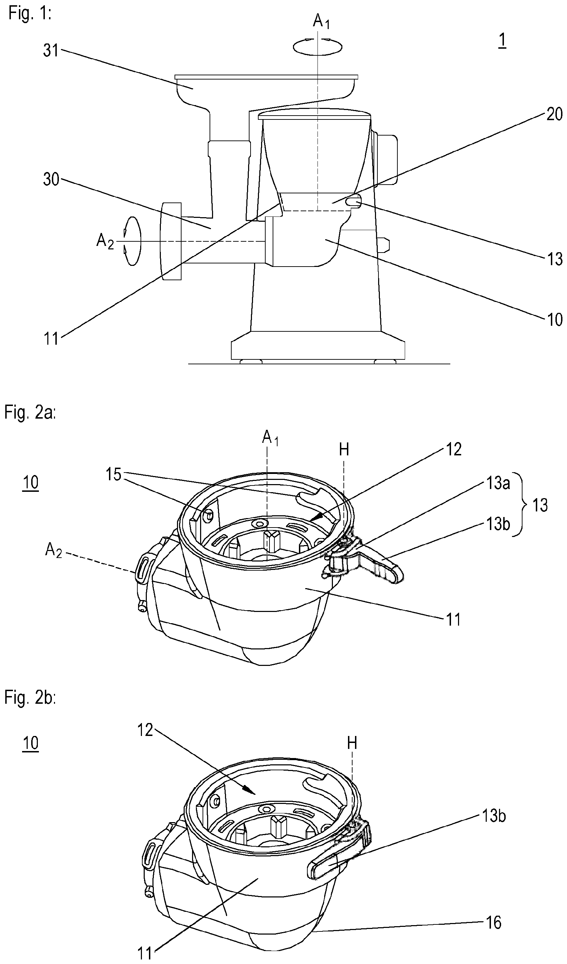

In Figur 1 ist schematisch eine erfindungsgemäße Küchenmaschine 1 mit einem angeschlossenen Getriebeadapter 10 sowie einer daran montierten Küchenmaschinenkomponente 30 in einer bestimmungsgemäßen Ausrichtung auf einem Untergrund U stehend dargestellt. Die Küchenmaschinenkomponente 30 könnte beispielsweise ein Fleischwolf oder eine sonstige Zerkleinerungsvorrichtung sein, in den bzw. in die durch einen Einfülltrichter 31 ein jeweiliges Lebensmittel zur Bearbeitung durch die Küchenmaschinenkomponente 30 eingefüllt werden kann.

Der Getriebeadapter 10 ist dazu eingerichtet, eine von einem Elektromotor der Küchenmaschine bewirkte Rotation um eine küchenmaschinenseitige (erste) Rotationsachse A₁ umzulenken, nämlich in eine Rotation um eine zweite Rotationsachse A₂ umzuwandeln, die vorliegend senkrecht zur ersten Rotationsachse A₁ verläuft.

Der Getriebeadapter umfasst einen ringartigen Gehäusebereich 11, der im gezeigten Zustand an einen (in der Figur gestrichelt dargestellten) Adapteranschluss 20 der Küchenmaschine angeschlossen bzw. auf sie aufgesetzt ist und den Adapteranschluss somit umgibt.

Figur 2a zeigt einen exemplarischen Getriebeadapter 10 gemäß einer Ausführungsform der vorliegenden Erfindung in perspektivischer Ansicht. Der Getriebeadapter umfasst einen ringartigen Gehäusebereich 11, der um einen Innenbereich 12 herum angeordnet ist, und er ist dazu eingerichtet, eine küchenmaschinenseitige Rotation um eine Rotationsachse A₁ in eine Rotation mit Rotationsachse A₂ umzulenken.

Der Innenbereich 12 ist dazu eingerichtet, den Adapteranschluss aufzunehmen. Die dem Innenbereich 12 zugewandte Oberfläche des ringartigen Gehäusebereichs 11 weist Halteelemente auf, die dazu eingerichtet sind, mit entsprechenden (nicht dargestellten) Adapteranschluss-Halteelementen zusammenzuwirken und so den Getriebeanschluss am Adapteranschluss zu halten.

Der Getriebeadapter 10 umfasst ferner einen Verschlusshebel 13 mit einem Wirkabschnitt 13a und einem Betätigungsarm 13b. In der in der Figur gezeigten Situation befindet sich der Verschlusshebel 13 in einer Öffnungsstellung, in welcher der Getriebeadapter auf einen (passenden) Adapteranschluss einer Küchenmaschine aufgesetzt (und damit an ihn angeschlossen) werden kann. In dieser Stellung steht der Betätigungsarm 13b im Wesentlichen radial (bezogen auf die Rotationsachse A₁) vom ringartigen Gehäusebereich 11 ab.

In Figur 2b ist der Getriebeadapter 10 der Figur 2a in einer Situation dargestellt, in welcher der Verschlusshebel in eine Schließstellung gebracht wurde. In dieser Stellung liegt der Betätigungsarm 13b des Verschlusshebels 13 (im Wesentlichen) am Gehäuse des Getriebeadapters an, und zwar im Querschnitt (entlang einer Ebene senkrecht zur Rotationsachse A₁) vorliegend im Wesentlichen tangential an einem kreisförmigen Außenrand des ringartigen Gehäusebereichs 11.

Da die Hebelachse H im in den Figuren 2a, 2b dargestellten Ausführungsbeispiel (mindestens im Wesentlichen) parallel zur Rotationsachse A₁ des Innenbereichs verläuft, ist der Hebel zwischen der Öffnungsstellung und der Schließstellung in einer Ebene verschwenkbar, zu der die Rotationsachse A₁ orthogonal verläuft; ist der Getriebeadapter - wie in der Figur 1 gezeigt - an eine Küchenmaschine in einer bestimmungsgemäßen Ausrichtung angeschlossen, kann der Hebel somit in einer horizontalen Ebene verschwenkt werden, und der in der Schließstellung (im Wesentlichen tangential) am Gehäuse des Getriebeadapters anliegende Betätigungsarm 13b erstreckt sich (in seiner Längsrichtung) entlang der genannten Ebene (die von der zentralen Achse senkrecht durchstoßen wird).

Alternativ könnte der Verschlusshebel beispielsweise in einer Ebene mit der Rotationsachse A₁ verschwenkbar sein, die Hebelachse also senkrecht zur Rotationsachse A₁ verlaufen. Der in der Schließstellung (vorzugsweise im Wesentlichen tangential) anliegende Betätigungsarm könnte sich (in seiner Längsrichtung) in diesem Fall insbesondere zum Knie 16 des Getriebeadapters hin erstrecken, in der in der Figur 1 gezeigten Ausrichtung also in vertikaler Richtung.

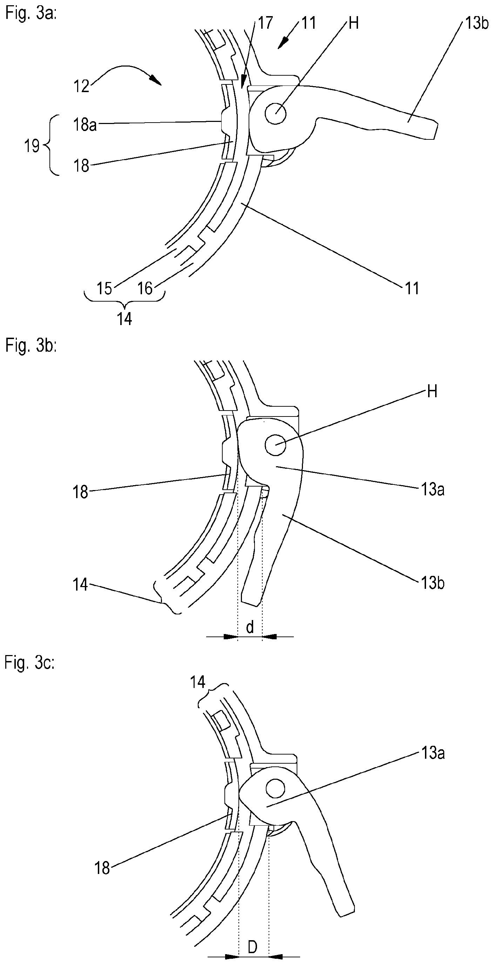

In den Figuren 3a, 3b und 3c ist jeweils schematisch eine Draufsicht auf einen Ausschnitt eines ringartigen Gehäusebereichs 11 eines erfindungsgemäßen Getriebeadapters 10 gezeigt. Der ringartige Gehäusebereich 11 weist dabei eine Wandung 14 auf, die - bezogen auf den Innenbereich 12 - eine innere Gehäusewand 15 und eine äußere Gehäusewand 16 umfasst, zwischen denen ein Zwischenraum 17 ausgebildet ist.

Der Getriebeadapter 10 umfasst einen Rastmechanismus 19 mit einem flexiblen Element 18, das eine Erhebung 18a aufweist; diese ist dazu eingerichtet, in eine entsprechende Ausnehmung an einem (nicht gezeigten) Adapteranschluss einzudringen und so die Verrastung zu bewirken. Dazu
wird das flexible Element in den Zwischenraum 17 hineingedrückt (wobei das flexible Element radial nach außen nachgibt), wenn der Getriebeadapter 10 mittels einer Drehung an einen Adapteranschluss angeschlossen oder von ihm gelöst wird (nicht dargestellt).

Das Hineindrücken des flexiblen Elements 18 in den Zwischenraum 17 erfolgt vorzugsweise durch einen (nicht dargestellten) Oberflächenbereich am Adapteranschluss, der bei der Drehung des Getriebeadapters gegen die Erhebung 18a drückt, bis diese in die Ausnehmung eindringt (beispielsweise einschnappt). So kann der Rastmechanismus im Wege der Eindrehung aktiviert werden. Die Erhebung 18a weist einen angeschrägten Rand auf, der dazu eingerichtet ist, bei einem Herausdrehen des Getriebeadapters mit einem (vorzugsweise ebenfalls angeschrägten) Rand der Ausnehmung des Adapteranschluss so zusammenzuwirken, dass die Erhebung 18a in der Öffnungsstellung des Hebels wiederum mitels der Drehung aus der Ausnehmung gedrängt und das flexible Element 18 damit in den Zwischenraum 17 gedrückt, der Rastmechanismus also deaktiviert wird.

Die dem Innenraum 12 zugewandte Oberfläche des flexiblen Element ist im in der Figur 3a gezeigten unbelasteten Zustand im Wesentlichen glatt in eine das flexible Element 18 umgebende entsprechende Oberfläche der inneren Gehäusewand 15 eingebettet. Das flexible Element ist so durch die innere Gehäusewand 15 geschützt und der Getriebeadapter daher besonders haltbar.

In Figur 3a ist der um die Hebelachse H verschwenkbare Verschlusshebel 13 des Getriebeadapters in einer Öffnungsstellung gezeigt, in welcher der Wirkabschnitt 13a des Verschlusshebels nur minimal in die Wandung 14 eindringt.

Der Wirkabschnitt 13a ist daher von dem flexiblen Element 18 beabstandet, so dass diesem Raum für die genannte Bewegung radial nach außen gegeben ist und der Getriebeadapter 10 vom Adapteranschluss gelöst bzw. an ihn angeschlossen werden kann werden kann.

In Figur 3b ist der Verschlusshebel 13 dagegen in einer Schließstellung gezeigt. In dieser Stellung ragt der Wirkabschnitt 13a um einen Abstand d in die Wandung 14 des ringartigen Gehäusebereichs 11 hinein und drückt so gegen das flexible Element 18 am Adapteranschluss 20. Dadurch wird das flexible Element 18 nach außen blockiert werden, so dass ein Ablösen des Getriebeadapters von einem Adapteranschluss der Küchenmaschine bzw. ein Anschließen unterbunden wird.

Figur 3c zeigt eine Zwischenstellung des Verschlusshebels 13 am Getriebeadapter 10: In dieser Stellung ragt der Wirkabschnitt 13a des Verschlusshebels um den Abstand D > d in die Wandung 14 des ringartigen Gehäusebereichs 11 hinein (also sogar weiter als in der Schließstellung) und drückt so das flexible Element 18 radial nach innen. Das flexible Element 18 gibt dabei leicht radial nach (im gezeigten Beispiel sogar in den Innenbereich, ggf. in einen Zwischenraum zwischen ringartigem Gehäusebereich und angeschlossenem Adapteranschluss hinein), vorzugsweise entgegen einer radial nach außen wirkenden Rückstellkraft. In einem Zustand, in dem der Getriebeadapter an einen Adapteranschluss angeschlossen ist, hat das fixierte flexible Element in der Schließstellung somit noch einen entprechenden Bewegungsspielraum (mit einer radialen Ausdehnung von mindestens D-d), so dass die Zwischenstellung bei Anwendung einer Mindestkraft einzustellen ist.

Diese Ausführungsform hat den Vorteil, dass in einer Schließstellung des Verschlusshebels zum Öffnen erst die genannte Rückstellkraft überwunden werden muss, was ein unbeabsichtigtes Verschwenken des Verschlusshebels und somit ein (beispielsweise durch Vibrationen bedingtes) unerwünschtes Ablösen des Getriebeadapters vom Adapteranschluss verhindert.

Ein erfindungsgemäßer Getriebeadapter 10 ist zum Anschluss an eine Küchenmaschine 1 vorgesehen und dazu eingerichtet, eine von einem Elektromotor der Küchenmaschine bewirkte Rotation umzulenken. Er umfasst ein Gehäuse mit einem ringartigen Gehäusebereich 11, der einen Innenbereich 12 zur Aufnahme eines küchenmaschinenseitigen Adapteranschlusses umgibt. Der Getriebeadapter weist ferner einen Rastmechanismus 19 mit einem flexiblen Element 18 zum Verrasten mit dem Adapteranschluss sowie einen Verschlusshebel 13 auf, der in einer Schließstellung das flexible Element fixiert.

Eine erfindungsgemäße Küchenmaschine 1 umfasst einen Adapteranschluss 20 und einen an den Adapteranschluss anzuschließenden oder angeschlossenen Getriebeadapter 10.

### Bezugszeichen

- 1: Küchenmaschine
- 10: Getriebeadapter
- 11: ringartiger Gehäusebereich
- 12: Innenbereich
- 13: Verschlusshebel
- 13a: Wirkabschnitt
- 13b: Betätigungsarm
- 14: Wandung
- 15: innere Gehäusewand
- 16: äußere Gehäusewand
- 17: Zwischenraum
- 18: flexibles Element
- 18a: Erhebung
- 19: Rastmechanismus

- 20: Anschlussadapter

- 30: Küchenmaschinenkomponente
- 31: Einfülltrichter

- A₁: küchenmaschinenseitige (erste) Rotationsachse
- A₂: komponentenseitige (zweite) Rotationsachse

- d: Abstand, um den der Wirkabschnitt in Schließstellung des Verschlusshebels in die Wandung hineinragt
- D: Abstand, um den der Wirkabschnitt in einer Zwischenstellung des Verschlusshebels in die Wandung hineinragt
- H: Hebelachse
- U: Untergrund

## Patentansprüche

1. Getriebeadapter (10) zum Anschluss an eine Küchenmaschine, wobei der Getriebeadapter dazu eingerichtet ist, eine von einem Elektromotor der Küchenmaschine bewirkte Rotation umzulenken, und wobei der Getriebeadapter umfasst:
- ein Gehäuse mit einem ringartigen Gehäusebereich (11), der einen Innenbereich (12) zur Aufnahme eines küchenmaschinenseitigen Adapteranschlusses umgibt;
- einen Rastmechanismus (19) mit einem flexiblen Element (18) zum Verrasten mit dem Adapteranschluss und
- **gekennzeichnet durch** einen Verschlusshebel (13), der dazu eingerichtet ist, in einer Schließstellung das flexible Element (17) zu fixieren.

2. Getriebeadapter gemäß Anspruch 1, wobei der Verschlusshebel (13) mindestens teilweise außen am ringartigen Gehäusebereich (11) angeordnet ist.

3. Getriebeadapter gemäß Anspruch 1 oder 2, wobei der Verschlusshebel (13) einen Wirkabschnitt (13a) umfasst, der dazu eingerichtet ist, in der Schließstellung von außen in eine Wandung (14) des ringartigen Gehäusebereichs (11) hineinzuragen.

4. Getriebeadapter gemäß Anspruch 3, wobei der Wirkabschnitt (13a) dazu eingerichtet ist, in einer Zwischenstellung zwischen einer Öffnungsstellung und der Schließstellung radial weiter in die Wandung hineinzuragen als in der Schließstellung.

5. Getriebeadapter gemäß einem der vorhergehenden Ansprüche, wobei das flexible Element (18)
- dazu eingerichtet ist, in Richtung zum Innenbereich (12) hin nachzugeben und/oder
- dazu eingerichtet ist, in Richtung vom Innenbereich (12) weg nachzugeben.

6. Getriebeadapter gemäß einem der vorhergehenden Ansprüche, wobei der Verschlusshebel (13) einen Betätigungsarm (13b) aufweist, der dazu eingerichtet ist,
- in der Schließstellung des Verschlusshebels im Wesentlichen an dem Gehäuse des Getriebeadapters (10) anzuliegen; und/oder
- in einer Öffnungsstellung des Verschlusshebels im Wesentlichen radial vom ringartigen Gehäusebereich (11) abzustehen.

7. Getriebeadapter gemäß einem der vorhergehenden Ansprüche, wobei mindestens der ringartige Gehäusebereich (11) und/oder das flexible Element (18) ganz oder teilweise aus Metall bestehen.

8. Küchenmaschine (1) mit einem Adapteranschluss (20) und einem an den Adapteranschluss anzuschließenden oder angeschlossenen Getriebeadapter (10) gemäß einem der vorhergehenden Ansprüche.

9. Küchenmaschine gemäß Anspruch 8, wobei der Getriebeadapter (10) dazu eingerichtet ist, mit einer jeweiligen Drehbewegung in den Adapteranschluss (20) eingedreht bzw. aus diesem herausgedreht zu werden, und wobei der Adapteranschluss einen Oberflächenbereich aufweist, der dazu eingerichtet ist, das flexible Element bei einem Eindrehen nach radial außen zu drücken.

## Claims

1. Transmission adapter (10) for connection to a food processor, wherein the transmission adapter is designed to deflect a rotation produced by an electric motor of the food processor, and wherein the transmission adapter comprises:
- a housing with a ring-shaped housing area (11), which surrounds an inner area (12) for receiving a food processor-side adapter connection;
- a locking mechanism (19) with a flexible element (18) for locking to the adapter connection and
- **characterised by** a locking lever (13), which is designed to fix the flexible element (17) in a closed position.

2. Transmission adapter according to claim 1, wherein the locking lever (13) is arranged at least partially outside of the ring-shaped housing area (11).

3. Transmission adapter according to claim 1 or 2, wherein the locking lever (13) comprises an active section (13a) which is designed, in the closed position, to project from the outside into a wall (14) of the ring-shaped housing area (11).

4. Transmission adapter according to claim 3, wherein the active section (13a) is designed, in an intermediate position between an open position and the closed position, to project radially further into the wall than in the closed position.

5. Transmission adapter according to one of the preceding claims, wherein the flexible element (18)
- is designed to yield in the direction toward the inner area (12) and/or
- is designed to yield in the direction away from the inner area (12).

6. Transmission adapter according to one of the preceding claims, wherein the locking lever (13) has an actuation arm (13b), which is designed
- in the closed position of the locking level, to rest substantially on the housing of the transmission adapter (10); and/or
- in an open position of the locking lever, to project substantially radially from the ring-shaped housing area (11).

7. Transmission adapter according to one of the preceding claims, wherein at least the ring-shaped housing area (11) and/or the flexible element (18) consist entirely or partially of metal.

8. Food processor (1) with an adapter connection (20) and a transmission adapter (10) which is connected or is to be connected to the adapter connection according to one of the preceding claims.

9. Food processor according to claim 8, wherein the transmission adapter (10) is designed to be rotated in and out of the adapter connection (20) with a respective rotational movement, and wherein the adapter connection has a surface area which is designed to press the flexible element radially outward when screwing it in.

## Revendications

1. Adaptateur de transmission (10) pour le raccordement à un robot ménager, l'adaptateur de transmission étant configuré pour dévier une rotation causée par un moteur électrique du robot ménager, et l'adaptateur de transmission comprenant :
- un boîtier doté d'une partie de boîtier (11) annulaire qui entoure une zone intérieure (12) destinée à loger un raccord d'adaptateur côté robot ménager ;
- un mécanisme d'encliquetage (19) doté d'un élément flexible (18) pour l'encliquetage avec le raccord d'adaptateur, et
- **caractérisé par** un levier de verrouillage (13) qui est configuré, dans une position de fermeture, pour fixer l'élément flexible (17).

2. Adaptateur de transmission selon la revendication 1, le levier de verrouillage (13) étant disposé au moins en partie à l'extérieur sur la partie de boîtier (11) annulaire.

3. Adaptateur de transmission selon la revendication 1 ou 2, le levier de verrouillage (13) comprenant une section active (13a) qui est configurée, dans la position de fermeture, pour faire saillie dans une paroi (14) de la partie de boîtier (11) annulaire.

4. Adaptateur de transmission selon la revendication 3, la section active (13a) étant configurée, dans une position intermédiaire entre une position d'ouverture et la position de fermeture, pour faire encore plus saillie radialement dans la paroi que dans la position de fermeture.

5. Adaptateur de transmission selon l'une quelconque des revendications précédentes, l'élément flexible (18)
- étant configuré pour se relâcher en direction de la zone intérieure (12), et/ou
- étant configuré pour se relâcher en s'éloignant de la zone intérieure (12).

6. Adaptateur de transmission selon l'une quelconque des revendications précédentes, le levier de verrouillage (13) présentant un bras d'actionnement (13b) qui est configuré,
- dans la position de fermeture du levier de verrouillage, pour être essentiellement adjacent au boîtier de l'adaptateur de transmission (10) ; et/ou
- dans une position d'ouverture du levier de verrouillage, pour dépasser essentiellement radialement de la partie de boîtier (11) annulaire.

7. Adaptateur de transmission selon l'une quelconque des revendications précédentes, au moins la partie de boîtier (11) annulaire et/ou l'élément flexible (18) étant constitués entièrement ou en partie de métal.

8. Robot ménager (1) comprenant un raccord d'adaptateur (20) et un adaptateur de transmission (10) à raccorder ou raccordé au raccord d'adaptateur, selon l'une quelconque des revendications précédentes.

9. Robot ménager selon la revendication 8, l'adaptateur de transmission (10) étant configuré pour être vissé dans le raccord d'adaptateur (20) resp. être dévissé de celui-ci à l'aide d'un mouvement rotatif respectif, et le raccord d'adaptateur présentant une zone de surface qui est configurée pour presser l'élément flexible radialement vers l'extérieur lors d'un serrage.
